Europäisches Patentamt

European Patent Office

Office européen des brevets

(11) Publication number: **0 096 498**
**B1**

# EUROPEAN PATENT SPECIFICATION

(45) Date of publication of patent specification: 06.08.86

(51) Int. Cl.⁴: **F 16 D 55/224**

(21) Application number: **83302946.5**

(22) Date of filing: **23.05.83**

(54) **A disc brake and disc brake pad.**

(30) Priority: **09.06.82 GB 8216782**

(43) Date of publication of application:
**21.12.83 Bulletin 83/51**

(45) Publication of the grant of the patent:
**06.08.86 Bulletin 86/32**

(84) Designated Contracting States:
**BE DE FR GB IT SE**

(56) References cited:
**DE-A-2 229 838**
**DE-A-2 931 216**
**GB-A-2 058 969**
**GB-A-2 069 078**

(73) Proprietor: **AUTOMOTIVE PRODUCTS PUBLIC LIMITED COMPANY**
**Tachbrook Road**
**Leamington Spa Warwickshire CV31 3ER (GB)**

(72) Inventor: **Hodkinson, Harold**
**54 St. Martins Road**
**Finham Coventry West Midlands (GB)**

(74) Representative: **Cundy, Anthony Brian**
**Anthony Cundy & Company 384 Station Road**
**Dorridge**
**Solihull West Midlands B93 8ES (GB)**

Courier Press, Leamington Spa, England.

Description

This invention relates to disc brakes and disc brake pads primarily but not exclusively for use on motor vehicles.

One increasingly popular type of disc brake is that in which a fixed support carries two pins parallel to the disc axis and in which a caliper incorporating an actuator and two friction pads and guided for axial movement on the pins. It is desirable for at least one of the pins to be removable to facilitate replacement of worn friction pads. Also, it is normally essential for each pin to be sufficiently strong and rigid to transmit the whole of the brake torque generated during braking to the fixed support. This is because in many installations, the pads bear against one pin during one direction of rotation of the disc but in the opposite direction of rotation they bear against the other pin.

An objective of the invention is to provide a disc brake of the kind in which the caliper and pads slide on pins which is less costly than many known designs.

In particular the invention relates to a disc brake of the kind comprising: a fixed support arranged to one side of a rotatable brake disc; two pins secured to the support and extending parallel to the disc axis away from the disc; two friction pads arranged one to each side of the disc; a caliper slidably mounted on the pins, having an actuator located on the same side of the disc as the support and operable to thrust one pad into frictional engagement with the disc during application of the brake and having a limb extending across the periphery of the disc to provide a reaction support for the other pad to bring it into frictional engagement with the disc on application of the brake; the pins each having an axial extension which extends across the periphery of the disc and the extensions serving to constrain the pads and transmit brake-torque from the pads to the fixed support. A disc brake of this kind is known from GB—A—2058969. According to the present invention a disc brake of this kind is characterised in that all the brake torque in both directions of disc rotation is transmitted through the axial extension of one and the same pin.

Preferably the other pin provides only radial support for the pads and is detachably mounted in the support such that removal of the pin allows the caliper to swivel on said one pin to facilitate removal of the pads. Said one pin may have a portion of reduced diameter adjacent the fixed support and the pad adjacent the fixed support may engage in said one pin by means of an aperture having an opening greater than said reduced diameter whereby the pad can be slid to the reduced diameter portion and then disengaged from the pin. Alternatively, or in addition, said one pin may be narrower in one direction than in other directions, for example by means of flats on its diameter, and the pads may engage this pin by means of apertures having openings wider than the narrow dimension of the pin whereby the pads can be disengaged from the pin on alignment of the openings with the direction in which the pin is narrow.

It is also known from GB—A—2058969 to provide a friction pad for a brake disc of the kind including a back plate having two apertures therein whereby in use the pad is supported on two pins, one of the apertures being open on one side and the other of said apertures being elongated so as to have clearance on its respective pin in the circumferential direction of the disc brake disc. According to a second aspect of the invention a friction pad of this kind is characterised in that said one aperture is such that it can surround its respective pin far more than half its circumference whereby it can locate the pad on the pin both circumferentially and radially and transmit brake torque in both directions of rotation. The open side of said one aperture may be the radially inner side with respect to the disc brake disc.

The invention will be described by way of example and with reference to the accompanying drawings in which:-

Figure 1 is an elevation of a disc brake according to this invention;

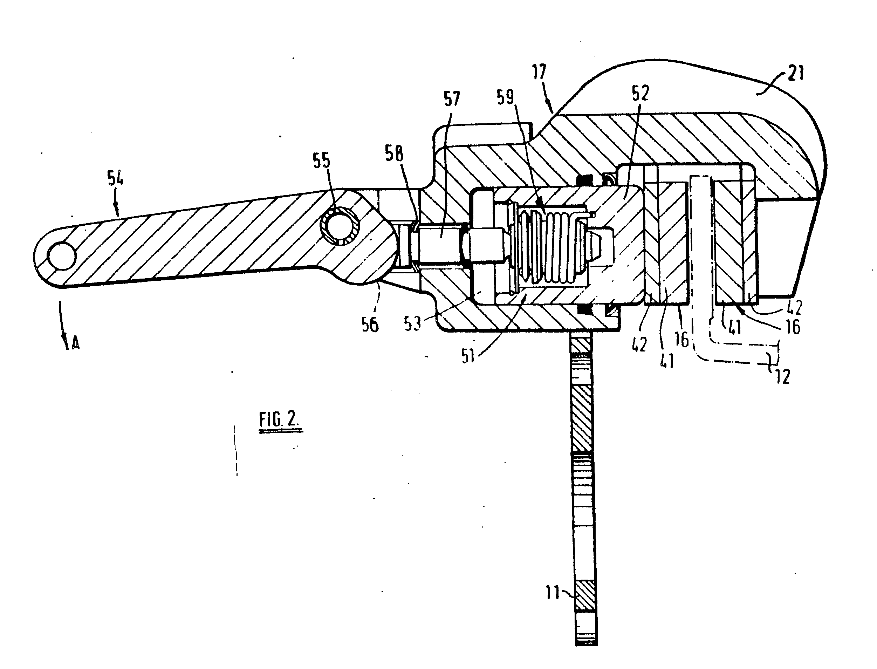

Figure 2 is a section on the line X—X of Figure 1 showing also the brake disc in dotted lines;

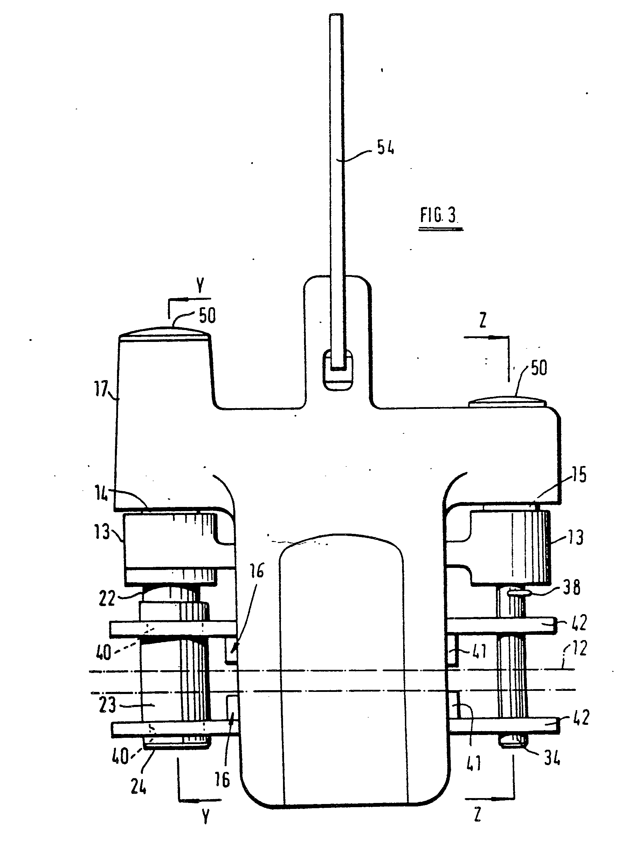

Figure 3 is a plan view of the caliper of Figure 1;

Figure 4 is a section on the line Y—Y of Figure 3; and

Figure 5 is a section on the line Z—Z of Figure 3.

An automobile disc brake includes a fixed support 11 which in use is bolted to, for example, the stub axle of a motor vehicle front suspension and is located on one side of a rotary disc 12 which rotates with the vehicle front wheel. The support 11 has two arms 13 which are mutually circumferentially spaced and project radially outward of the disc 12. Two pins 14 and 15 are secured one to each arm 13 and extend axially away from the disc 12.

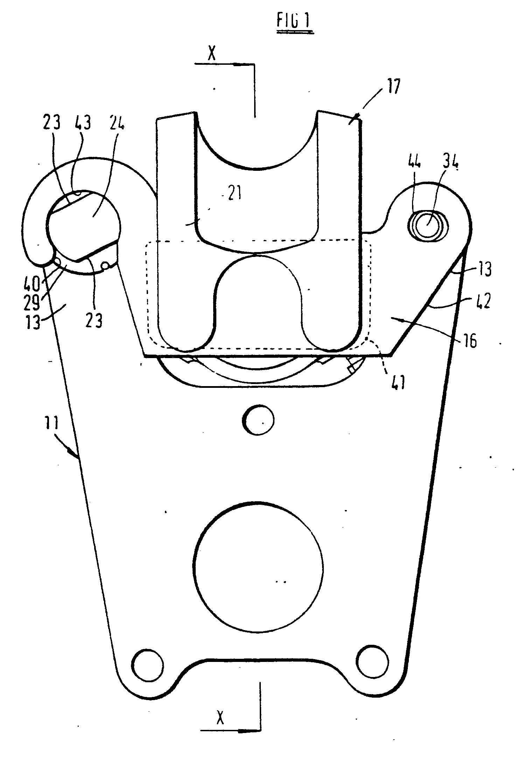

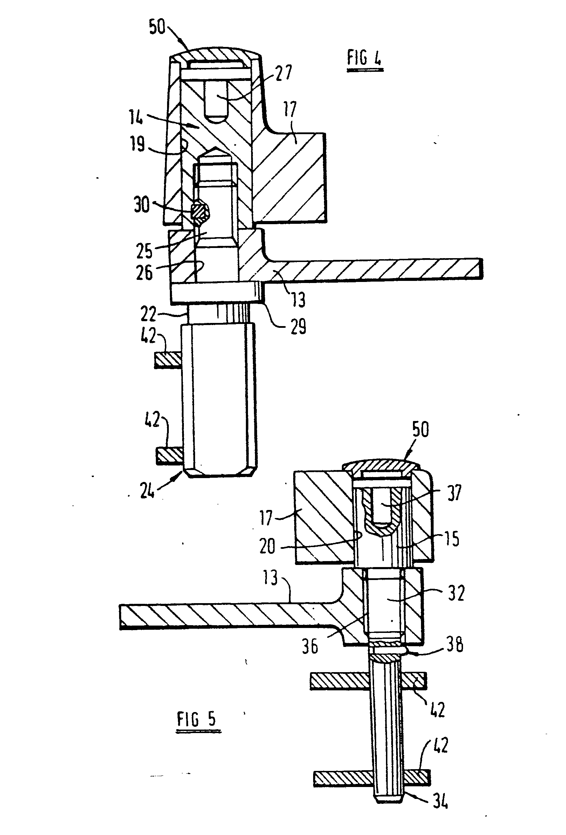

One pin 14 has an axial extension 24 (see figure 4) which extends across the outer periphery of the disc. The extension 24 is of circular cross-section but with two opposed flats 23 thereon (figure 1). Extension 24 has a screw-threaded portion 25 that passes through an aperture 26 in its respective arm 13 and screws into the other part of pin 14. The pin 14 has a hexagon socket 27 in its free end to facilitate the assembly of the pin 14 with its extension 24 onto its respective arm 13. The extension 24 has a reduced diameter portion 22 adjacent a flange 29 which abuts the arm 13. A nylon type lock washer 30 within the pin 14 serves to hold the pin 14 and its extension 24 securely together.

The other pin 15 (see figure 5) has a threaded portion 32 which screws into an aperture 36 in its respective arm 13 and has an integral axial extension 34 which extends across the outer periphery of the disc 12. The pin 15 has a hexagon socket 37 in its free end to enable it to be readily screwed in and out of its respective arm 13. The pin 15 is locked in position in its arm by a clip 38 which passes through a diametral hole in the pin 15. The extension 34 of the pin 15 is of smaller diameter than the extension 24 of the pin 14.

Two friction pads 16 are arranged one on each side of the disc 12. The pads 16 are constrained for axial movement by the pins 14 and 15. Each pad 16 comprises friction material 41 moulded onto a steel back plate 42. Each back plate 42 has two circumferentially spaced apertures 43 and 44 therein that accommodate the axial extensions 24 and 34 respectively. The aperture 43, that accommodates the larger diameter axial extension 24 of the pin 14, is open on one side at 40, that being the radially inner side with respect to the disc, but extends around more than half the circumference of the axial extension 24 so that the pad cannot be directly removed radially from extension. The aperture 44 that accommodates the smaller diameter axial extension 34 of the pin 15 is circumferentially elongated so that the extension 34 supports the pad against radial movement but not against circumferential movement. This ensures that on application of the brakes the brake torque on the pads is reacted solely by the axial extension 24 of the pin 14.

A caliper 17 has a bore 19 by which it is slidably mounted on the larger pin 14. The smaller pin 15 also engages in a bore 20 in the caliper and acts largely to prevent rotation of the caliper about larger pin 14. The free ends of the bores 19 and 20 are each closed by a grommet 50. The caliper 17 has a limb 21 which extends across the periphery of the disc 12 and engages behind the pad 16 on the far side of the disc to form a reaction support for the pad as will be explained below. An actuator 51 is housed in the caliper 17 on the same side of the disc as the support 11. The actuator 51 has a piston 52 housed in a chamber 53 in the caliper and which is operable both mechanically and hydraulically to urge one pad 16 directly against the disc 12. The associated reaction causes the caliper 17 to move on the pins 14 and 15 to apply the other pad 16 to the other side of the disc by means of reaction support 21.

Hydraulic actuation of the brake is effected by the introduction of hydraulic pressure from a master cylinder (not shown) into the chamber 53. Mechanical actuation of the brake is effected via a lever 54 which pivots on a swivel pin 55 on the caliper 17. The end of the lever 54 adjacent the actuator 51 has a cam surface 56 thereon that abuts against a strut 57 that sealingly passes through the caliper into the chamber 53 to abut the piston 52. A Belleville spring stack 58 which reacts between the strut 57 and the outside surface of the caliper serves to keep the strut against the cam surface of the lever. The brake is applied mechanically by moving the lever in the direction of arrow A which thrusts the strut 57 against the piston 52 to move the pad 16 against the disc 12.

In order to compensate for pad wear the strut 57 is fitted with an adjuster 59 which automatically alters the length of the strut to maintain a substantially constant running clearance between the pads 16 and the disc 12.

The adjuster 59 is as described in UK patent specification 971 799 and is not described in detail because it forms no part of the invention. The extension 24 of the larger pin 14 is sufficiently robust to transmit all of the brake torque from the pads 16 to the fixed support 11. In contrast, the extension of pin 15 which guides the opposite end of the pads cannot have brake torque applied to it and thus can be relatively thin. This thin extension is a particularly attractive feature in designing the whole pin to be removable from the brake in a direction away from the pads 16.

In order to replace worn pads from the brake, pin 15 is removed by first removing grommet 50 and then unscrewing the pin with a tool engaged in socket 37. The caliper and pads together are then pivotted about pin 14 in a direction away from the disc. The shape of the apertures 43 and in particular the width of their lower openings, enables the pads to be disengaged from pin 14 when this opening is in alignment with the narrow dimension of the pin created by the opposed flats 23. Alternatively, the pads may be slid along the pin 14 to the narrow portion 22 to facilitate disengagement. Replacement pads are installed in the same way as the worn pads are removed. The caliper is then swung back to its working position and the pin 15 is re-engaged.

It should be observed that pin 14 together with its extension requires substantial strength which can be provided without any regard for designing the pin or part of it to be readily removable. In contrast, pin 15 needs to be removable but in the extension region where it supports the pad 16, no great strength is needed. By this means, both pins can be designed in detail for their individual but differing requirements and a particularly effective design of disc brake results.

## Claims

1. A disc brake comprising: a fixed support (11) arranged to one side of a rotatable brake disc; two pins (14 and 15) secured to the support and extending parallel to the disc axis away from the disc; two friction pads (16) arranged one to each side of the disc; and a caliper (17) slidably mounted on the pins, having an actuator (51) located on the same side of the disc as the support and operable to thrust one pad into frictional engagement with the disc during application of the brake and having a limb (21) extending across the periphery of the disc to provide a reaction support for the other pad to bring it into frictional engagement with the disc on application of the brake; the pins each having an axial extension (24 and 34 respectively) which extends across the periphery of the disc and the extensions serving to constrain the pads and transmit brake torque from the pads to the fixed support, characterised in that all the brake torque in both directions of disc rotation is transmitted through the axial extension of one and the same pin (14).

2. A brake according to claim 1, characterised in that the axial extension (34) of the other pin (15) provides only radial support for the pads (16) and this pin is detachably mounted in the support (11), removal of the pin allowing the caliper (17) to swivel on said one pin (14) to facilitate removal of the pads (16).

3. A brake according to claim 2, characterised in that said one pin has a portion of reduced diameter (22) adjacent the fixed support (11) and the pad (16) adjacent the fixed support engages said one pin by means of an aperture (43) having an opening greater than said reduced diameter whereby the pad can be slid to the reduced diameter portion and then disengaged from the pin.

4. A brake according to claim 2 characterised in that said one pin is narrower in one direction than in other directions (flats 23) and the pads engage said one pin by means of apertures having openings (40) wider than the narrow dimension of the pin whereby the pads can be disengaged from the pin on alignment of the opening with the direction in which the pin is narrow.

5. A friction pad for a disc brake and including a back plate (42) having two apertures (43, 44) therein whereby in use the pad is supported on two pins (24, 34), one (43) of the apertures (43, 44) being open on one side and the other (44) of the apertures being elongated so as to have clearance on its respective pin (34) in the circumferential direction of the disc brake characterised in that said one aperture (43) is such that it can surround its respective pin (24) for more than half its circumference whereby it can locate the pad on the pin both circumferentially and radially and transmit brake torque in both directions of disc rotation.

6. A friction pad as claimed in claim 5, characterised in that the open side (40) of the one aperture (43) is the radially inner side with respect to the disc brake disc.

## Revendications

1. Frein à disque comprenant: un support fixe (11) disposé sur un côté d'un disque rotatif de frein, deux broches (14 et 15) fixées sur ce support et s'étendant parallèlement à l'axe du disque à l'écart de ce disque, deux garnitures de friction (16) disposées une sur chaque côté du disque et un étrier (17) monté de manière coulissante sur les broches, présentant un organe de commande (51) disposé sur le même côté du disque que le support et manoeuvrable de façon à appuyer une garniture en contact de frottement avec le disque au cours de l'application du frein, et présentant une branche (21) s'étendant en travers de la périphérie du disque de façon à fournir un support de réaction à l'autre garniture afin de l'amener en contact de frottement avec le disque lors de l'application du frein, les broches présentant chacune un prolongement axial (respectivement 24 et 34) qui s'étend en travers de la périphérie du disque et ces prolongements servant à maintenir les garnitures et à transmettre le couple de freinage, de ces garnitures au support fixe, caractérisé en ce que l'ensemble du couple de freinage, dans l'un et l'autre sens de rotation du disque, est transmis par l'intermédiaire du prolongement axial d'une broche et toujours la même (14).

2. Frein selon la revendication 1, caractérisé en ce que le prolongement axial (34) de l'autre broche (15) ne fournit qu'un support radial aux plaquettes (16) et cette broche est montée de manière séparable dans le support (11), un retrait de la broche permettant à l'étrier (17) de pivoter sur ladite première broche (14) afin de faciliter le retrait des plaquettes (16).

3. Frein selon la revendication 2, caractérisé en ce que ladite première broche présente une partie de diamètre réduit (22) au voisinage du support fixe (11) et la plaquette (16) voisine de ce support fixe vient au contact de ladite première broche grâce à une ouverture (43) présentant un débouché plus grand que ledit diamètre réduit, de sorte qu'on peut faire glisser la plaquette jusqu'à cette partie de diamètre réduit, puis la dégager de la broche.

4. Frein selon la revendication 2, caractérisé en ce que ladite première broche est plus étroite dans une direction que dans les autres directions (méplats 23), et les plaquettes viennent au contact de cette première broche au moyen d'ouvertures présentant des débouchés (40) plus larges que la dimension étroite de la broche, de sorte que l'on peut dégager les plaquettes de la broche par alignement du débouché avec la direction dans laquelle cette broche est étroite.

5. Plaquette de friction pour un frein à disque et comprenant une plaque de support (42) dans laquelle sont ménagées deux ouvertures (43, 44), de sorte qu'en cours d'utilisation la plaquette est supportée sur les deux broches (24, 34), l'une (43) des ouvertures (43, 44) étant ouverte sur un côté et l'autre (44) des ouvertures étant allongée de façon à présenter un jeu sur ses broches respectives (34) suivant la direction circonférencielle du frein à disque, caractérisée en ce que ladite première ouverture (43) est telle qu'elle peut entourer sa broche respective (24) sur bien plus que la moitié de sa circonférence, de sorte qu'elle peut positionner la plaquette sur cette broche à la fois dans le sens circonférenciel et radialement et transmettre un couple de freinage suivant l'un et l'autre sens de rotation du disque.

6. Plaquette de friction telle que revendiquée dans la revendication 5, caractérisée en ce que le côté ouvert (40) de ladite ouverture (43) est le côté radialement intérieur par rapport au disque du frein à disque.

## Patentansprüche

1. Scheibenbremse mit einem festen Träger (11), der auf einer Seite einer drehbaren Bremsscheibe angeordnet ist, zwei Stiften (14 und 15), die an dem Träger befestigt sind und sich parallel zu der Scheibenachse von der Scheibe weg erstrecken, zwei Bremsklötzen (16), von denen jeweils einer auf jeder Seite der Scheibe angeordnet ist, und einem Sattel (17), der auf den Stiften verschiebbar angebracht ist, einen Stellantrieb (51) hat, der auf derselben Seite der Scheibe wie der Träger angeordnet ist und betätigbar ist, um einen Klotz in Reibeingriff mit der Scheibe während des Anlegens der Bremse zu drücken, und ein Glied (21) hat, das sich quer über den Rand der Scheibe erstreckt, um ein Reaktionslager für den anderen Klotz zu bilden, um ihn in Reibeingriff mit der Scheibe beim Anlegen der Bremse zu bringen, wobei jeder Stift eine axiale Verlängerung (24 bzw. 34) hat, die sich quer über den Rand der Scheibe erstreckt, und wobei die Verlängerungen dazu dienen, die Klötze festzuhalten und das Bremsmoment von den Klötzen auf den festen Träger zu übertragen, dadurch gekennzeichnet, daß das gesamte Bremsmoment in beiden Richtungen der Scheibendrehung durch die axiale Verlängerung von einem und demselben Stift (14) übertragen wird.

2. Bremse nach Anspruch 1, dadurch gekennzeichnet, daß die axiale Verlängerung (34) des anderen Stiftes (15) nur eine radiale Abstützung für die Klötze (16) bereitstellt und dieser Stift lösbar in dem Träger (11) befestigt ist, wobei die Entfernung des Stiftes es ermöglicht, daß der Sattel (17) um den einen Stift (14) geschwenkt werden kann, um die Entfernung der Klötze (16) zu erleichtern.

3. Bremse nach Anspruch 2, dadurch gekennzeichnet, daß der eine Stift einem Abschnitt mit einem verringerten Durchmesser (22) angrenzend an den festen Träger (11) hat und der Klotz (16) neben dem festen Träger an dem einen Stift mittels eines Fensters (43) angreift, das eine Öffnung hat, die größer als der verringerte Durchmesser ist, wodurch der Klotz zu dem Abschnitt mit dem verringerten Durchmesser hingeschoben und dann von dem Stift gelöst werden kann.

4. Bremse nach Anspruch 2, dadurch gekennzeichnet, daß der eine Stift in einer Richtung schmäler als in den anderen Richtungen (Abflachungen 23) ist und die Klötze an dem einem Stift mittels Fenster angreifen, die Öffnungen (40) haben, die weiter also die schmale Ausdehnung des Stiftes sind, wodurch die Klötze beim Ausrichten der Öffnung mit der Richtung, in welcher der Stift schmal ist, von dem Stift gelöst werden können.

5. Bremsklotz für eine Scheibenbremse, mit einer Rückenplatte (42), die darin zwei Fenster (43, 44) hat, woduch in Gebrauch der Klotz auf zwei Stiften (24, 34) abgestützt wird, wobei eines (43) der Fenster (43, 44) auf einer Seite offen ist und das andere (44) der Fenster verlängert ist, so daß es auf seinem jeweiligen Stift (34) in der Umfangsrichtung der Scheibenbremse Spiel hat, dadurch gekennzeichnet, daß das eine Fenster (43) von der Artist, daß es seinen jeweiligen Stift (24) über mehr als die Hälfte seines Umfanges umgeben kann, wodurch es den Klotz an dem Stift so wohl in Umfangsrichtung als auch radial festhalten und das Bremsmoment in beiden Richtungen der Scheibendrehung weiterleiten kann.

6. Bremsklotz nach Anspruch 5, dadurch gekennzeichnet, daß die offene Seite (40) des einen Fensters (43) die radial innere Seite bezüglich der Scheibenbremsscheibe ist.

FIG 1

FIG. 2.

0 096 498

FIG. 3

FIG 4

FIG 5